# EUROPÄISCHE PATENTSCHRIFT

(11) **EP 2 059 765 B1**
(45) Veröffentlichungstag und Bekanntmachung des Hinweises auf die Patenterteilung: **12.10.2011**
(21) Anmeldenummer: 07802813.1
(22) Anmeldetag: 23.08.2007
(51) Int. Cl.: G01B 11/16, G01K 11/32

(54) **OPTISCHE EINRICHTUNG ZUR ÜBERWACHUNG EINER DREHBAREN WELLE MIT GERICHTETER ACHSE**
OPTICAL DEVICE FOR MONITORING A ROTATABLE SHAFT WITH AN ORIENTATED AXIS
DISPOSITIF OPTIQUE POUR SURVEILLER UN ARBRE ROTATIF A AXE ALIGNE

(30) Priorität: 06.09.2006 DE 102006041865
(43) Veröffentlichungstag der Anmeldung: 20.05.2009
(73) Patentinhaber: SIEMENS AKTIENGESELLSCHAFT, 80333 München (DE)
(72) Erfinder: BOSSELMANN, Thomas, 91080 Marloffstein (DE); WILLSCH, Michael, 07745 Jena (DE)
(86) Internationale Anmeldenummer: PCT/EP2007/058750
(87) Internationale Veröffentlichungsnummer: WO 2008/028813

(56) Entgegenhaltungen:
- DE-A1- 10 241 428
- US-A- 5 930 280
- US-A- 6 004 639
- US-A1- 2005 253 051
- US-B2- 6 923 048
- PIETER L SWART ET AL: "Dual Bragg grating sensor for concurrent torsion and temperature measurement" MEASUREMENT SCIENCE AND TECHNOLOGY, IOP, BRISTOL, GB, Bd. 17, Nr. 5, 1. Mai 2006 (2006-05-01), Seiten 1057-1064, XP020103493 ISSN: 0957-0233

## Beschreibung

Die Erfindung betrifft eine optische Einrichtung zur Überwachung einer drehbaren Welle mit gerichteter Achse.

Die Messung von Temperaturen und Dehnungen an drehenden Teilen, wie beispielsweise an Antriebswellen und Generatorwellen, gewinnt immer mehr an Bedeutung, da aufgrund immer höherer Leistungsanforderungen diese Teile bis an ihre Belastungsgrenzen betrieben werden. In der Regel werden hierfür konventionelle elektrische Temperatursensoren, wie z. B. Thermoelemente, und elektrische Dehnungssensoren, wie z. B. piezoelektrische Sensoren, verwendet. Dabei müssen zunächst die Sensorsignale auf der Welle konditioniert werden. Dies geschieht üblicherweise mit speziellen Messverstärkern. Mittels Funkübertragung oder IR-Übertragung werden dann die so konditionierten Messsignale von der Welle an eine bezüglich zur Welle ortsfest angeordnete Sende-/Empfangseinheit gesendet. Hierzu muss in jedem Fall Hilfsenergie auf der Welle bereitgestellt werden, um die dort angeordneten elektronischen Bauteile betreiben zu können. Dies kann beispielsweise durch eine Batterie oder auch durch einen induktiven Übertrager erfolgen. Insgesamt ist hiermit ein großer Aufwand zu betreiben. Da bei schnell drehenden Wellen enorm hohe Fliehkräfte auftreten können, müssen die entsprechenden Elektronikbauteile an diese extremen Bedingungen angepasst werden. Die Elektronikbauteile werden üblicherweise vergossen.

Es ist bekannt, anstelle von elektrischen Sensoren optische Sensoren auf der Basis von Lichtwellenleitern, wie beispielsweise FBG-Sensoren (FBG: Faser-Bragg-Gitter), für derartige Messungen an schnell drehenden Teilen zu verwenden. Dabei erweist sich die Ein- bzw. Auskopplung zwischen einer ortsfest angeordneten optischen Sende-/Empfangseinheit und der sich drehenden Welle als besonders schwierig. Hierfür sind beispielsweise an einer Stirnseite der sich drehenden Welle achsial angeordnete optische Übertrager besonders geeignet, die mittels zweier Kollimatoren Lichtsignale zwischen einer ortsfest zur Welle angeordneten Sende-/Empfangseinheit und einem auf der sich drehenden Welle angeordneten Lichtwellenleiter übertragen. Die beiden Kollimatoren sind dabei in einem gemeinsamen Gehäuse, welches mit einem drehfesten und einem drehbaren Teil ausgeführt ist, angeordnet. Ein derartiger optischer Übertrager ist jedoch nicht geeignet für die Messung an Wellen, deren Stirnseite nicht zugänglich ist.

Der Erfindung liegt nun die Aufgabe zugrunde, eine optische Einrichtung zur Überwachung einer drehbaren Welle anzugeben, welche robust ist und universell entlang der Welle eingesetzt werden kann.

Diese Aufgabe wird gemäß der Erfindung mit den in Anspruch 1 angegebenen Merkmalen gelöst.

Bei der erfindungsgemäßen optischen Einrichtung handelt es sich um eine optische Einrichtung zur Überwachung einer drehbaren Welle mit gerichteter Achse, umfassend
- mindestens einen auf der drehbaren Welle angeordneten, mit mindestens einem optischen Sensor versehenen Lichtwellenleiter, über welchen der mindestens eine optische Sensor mittels eines Lichtsignals abfragbar ist,
- eine bezüglich der drehbaren Welle ortfest angeordnete Sende-/Empfangseinheit, mit welcher das Lichtsignal aussendbar ist,
- Übertragungsmittel, mit welchen das Lichtsignal zwischen der ortsfest angeordneten Sende-/Empfangseinheit und dem auf der drehbaren Welle angeordneten Lichtwellenleiter übertragbar ist, und
- eine der Sende-/Empfangseinheit zugeordnete Auswerteeinheit zur Bestimmung einer physikalischen Größe aus einem vom mindestens einen optische Sensor herkommenden und vom Übertragungsmittel übertragenen Lichtsignal,
wobei das Übertragungsmittel
- mindestens einen bezüglich der drehbaren Welle ortfest angeordneten und der Sende-/Empfangseinheit zugeordnete optischen "Multi-Mode"-Wellenleiter mit zugeordnetem Koppelmittel und
- mindestens einen weiteren auf der drehbaren Welle exzentrisch zu deren Achse angeordneten und mit dem mindestens einen Lichtwellenleiter verbundenen optischen "Multi-Mode"-Wellenleiter mit zugeordnetem Koppelmittel aufweist, und
- die Lichtsignale über die Koppelmittel zwischen den optischen "Multi-Mode"-Wellenleitern übertragbar sind.

Durch die exzentrische Anbringung des weiteren "Multi-Mode"-Wellenleiters und des zugeordneten Koppelmittels auf der drehbaren Welle ist die Übertragung der Lichtsignale zwischen dem auf der Welle angeordneten Koppelmittel und dem ortsfest angeordneten Koppelmittel nur über eine Freistrahlkopplung möglich. Dabei können die Lichtsignale bei einer Wellenumdrehung nur in einem kleinen Zeitfenster zwischen den Koppelmitteln übergekoppelt werden. Da das Übertragungsmittel "Multi-Mode"-Wellenleiter aufweist, ist gewährleistet, dass kaum Koppelverluste beim Übertragen der Lichtsignale zwischen den Koppelmitteln auftreten. Durch das zweimalige Durchlaufen der Koppelstrecke, d.h. der Strecke zwischen beiden Koppelmitteln, bei einer Messung treten beispielsweise bei der Verwendung von "Single-Mode"-Lichtwellenleitern anstelle der "Multi-Mode"-Lichtwellenleiter zu hohe Koppelverluste auf, welche eine zuverlässige Messung nahezu unmöglich machen. Darüber hinaus ist eine Freistrahlkopplung von "Multi-Mode"-Lichtwellenleitern im Vergleich zu "Single-Mode"-Lichtwellenleitern bedeutend weniger Justage aufwendig und unempfindlicher gegenüber Dejustage. Die zu bestimmende physikalische Größe ist insbesondere die Temperatur und/oder die Dehnung der Welle.

Vorteilhafte Ausgestaltungen der optischen Einrichtung gemäß der Erfindung ergeben sich aus den von Anspruch 1 abhängigen Ansprüchen.

So ist es vorteilhaft, wenn der mindestens eine optische Sensor mindestens ein FBG-Sensor und der mindestens eine Lichtwellenleiter mindestens ein "Single-Mode"-Wellenleiter sind. Ein FBG-Sensor erlaubt eine nahezu punktförmige, also eine lokal sehr eng begrenzte Temperatur- und/oder Dehnungsmessung an der Welle. Demgegenüber hat ein grundsätzlich ebenfalls einsetztbarer optischer Sensor nach dem Brillouin- oder Raman-Prinzip üblicherweise eine gewisse lokal integrierende Wirkung, die z. B. über mehrere Meter reichen kann. Eine punktförmige Messung, d.h. insbesondere eine lokale Beschränkung der Erfassungsstelle auf wenige Millimeter, ist mit diesen Typen von optischen Sensoren kaum zu erreichen. Mit einem FBG-Sensor ist dies jedoch ohne weiteres möglich. Im FBG-Sensor wird dabei vom eingespeisten Lichtsignal ein durch die jeweilige Bragg-Wellenlänge (Schwerpunktwellenlänge) bestimmter Anteil zurückreflektiert. Die Bragg-Wellenlänge ändert sich mit der am Messort herrschenden Einflussgröße, hier insbesondere der Temperatur und/oder der Dehnung der Welle am Ort des FBG-Sensors. Diese Veränderung im Wellenlängengehalt (oder Wellenlängenspektrum) des jeweiligen zurückreflektierten (Teil-)Lichtsignals kann als Maß für die zu erfassende Einflussgröße (Temperatur und/oder Dehnung) verwendet werden. Zur Abfrage des FBG-Sensors mittels des Lichtsignals kommt insbesondere eine breitbandige Lichtquelle, wie beispielsweise eine LED mit einer Bandbreite von etwa 45 nm, eine SLD mit einer Bandbreite von etwa 20 nm oder ein durchstimmbarer Laser mit einer Bandbreite von etwa 100 nm zum Einsatz.

Vorteilhafterweise sind dabei mehrere FBG-Sensoren an unterschiedlichen Stellen entlang des mindestens einen optischen "Single-Mode"-Wellenleiters vorgesehen. Es ist auch günstig, wenn der mindestens eine auf der drehbaren Welle angeordnete "Multi-Mode"-Wellenleiter mit mehreren optischen "Single-Mode"-Wellenleitern verbunden ist. Somit lässt sich zum einen eine ortsaufgelöste Temperatur- und/oder Dehnungsverteilung bestimmen und zum anderen bei punktuellen Ereignissen, wie beispielsweise einer plötzlichen örtlich begrenzten Temperaturerhöhung und/oder Dehnung, der Ereignisort genau eingrenzen. Die Auflösung wird dabei lediglich durch die Beabstandung der einzelnen FBG-Sensoren zueinander bestimmt.

Es ist von Vorteil, wenn die FBG-Sensoren voneinander verschiedene Bragg-Wellenlängen aufweisen. Wird beispielsweise mit der optischen Einrichtung gemäß der Erfindung das so genannte Wellenlängen-Multiplexverfahren angewandt, können in der Regel bis zu 10 FBG-Sensoren nacheinander in einem Wellenleiter angeordnet sein. Das von der Sende-/Empfangseinheit in den "Multi-Mode"-Wellenleiter eingespeiste Lichtsignal muss hierfür einen Wellenlängenbereich aufweisen, der alle Bragg-Wellenlängen abdeckt. Wird andererseits alternativ zum Wellenlängen-Multiplexverfahren das so genannte Zeitmultiplexverfahren (OTDR: Optical Frequency Domain Reflectometry) verwendet, können nahezu unbegrenzt viele FBG-Sensoren in einem Lichtwellenleiter angeordnet werden. Dabei können die Sensoren auch bei identischer Bragg-Wellenlänge räumlich unterschieden werden.

Günstigerweise weist das von der Sende-/Empfangseinheit aussendbare Lichtsignal Wellenlänge aus dem sichtbaren Wellenlängenbereich, d.h. von 380 nm bis 780 nm, und/oder dem nahen Infrarot-Wellenlängenbereich (NIR), d.h. von 780 nm bis 2500 nm, auf.

Es ist günstig, wenn das von der Sende-/Empfangseinheit aussendbare Lichtsignal mindestens ein Lichtpuls ist. Vorteilhafterweise wird das Aussenden des Lichtsignals mit der Umdrehung der Welle getriggert. Somit werden nur bei Bedarf Lichtsignale ausgesandt und wieder empfangen. Die Sende-/Empfangseinheit arbeitet dabei energieeffizienter und weist dabei gleichzeitig eine längere Betriebsdauer auf.

Vorteilhafterweise weist die Auswerteeinheit ein optisches Spektrometer mit mindestens einer CCD-Zeile auf. Es ist aber auch günstig, wenn die Auswerteeinheit zumindest einen komplimentären Kantenfilter mit zumindest einem Fotodetektor aufweist. Diese Ausgestaltung einer solchen Auswerteeinheit ist gegenüber der Erstgenannten kostengünstiger zu realisieren.

Bevorzugte, jedoch keinesfalls einschränkende Ausführungsbeispiele des Verfahrens und der Anordnung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine optische Einrichtung zur Überwachung einer drehbaren Welle mittels optischer Sensoren in einem "Single-Mode"-Wellenleiter,
- Figur 2: eine optische Einrichtung zur Überwachung der drehbaren Welle mittels optischer Sensoren in mehreren "Single-Mode"-Wellenleitern,
- Figur 3: einen Querschnitt durch die Kontaktfläche eines "Multi-Mode"-Wellenleiters und mehrerer "Single-Mode"-Wellenleiter,
- Figur 4: einen Querschnitt durch die Kontaktfläche des "Multi-Mode"-Wellenleiters und mehrerer "Single-Mode"-wellenleiter mit im Vergleich zu Figur 3 vergrößertem Außendurchmesser,
- Figur 5: eine optische Einrichtung zur Überwachung einer drehbaren Welle mit radial ausgerichteter Koppelstrecke und mäanderförmig angeordnetem "Single-Mode"-Wellen-leiter,
- Figur 6: eine optische Einrichtung zur Überwachung einer drehbaren Welle mit auf der Welle angeordneten Mitteln zum Umlenken der Koppelstrecke und
- Figur 7: eine optische Einrichtung zur Überwachung einer drehbaren Welle mit ortsfest angeordneten Mitteln zum Umlenken der Koppelstrecke.

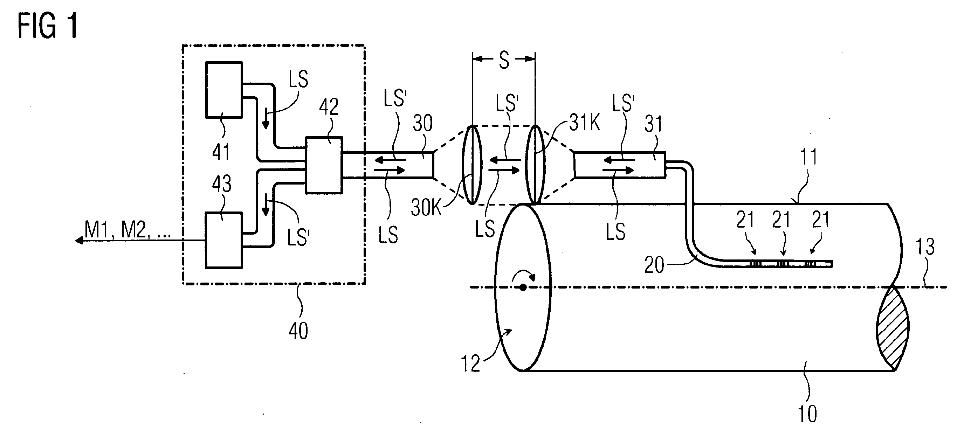

Einander entsprechende Teile sind in den Figuren 1 bis 7 mit denselben Bezugszeichen versehen.

In Figur 1 ist gemäß der Erfindung eine optische Einrichtung zur Überwachung einer Welle 10, insbesondere einer mit einer Maschine oder einem Generator verbundenen und drehbar gelagerten Welle 10, gezeigt. Die Welle 10 ist dabei um ihre gerichtete Achse 13 drehbar. Die Stirnseite der Welle 10 ist mit 12 bezeichnet. Auf und/oder in der Mantelfläche 11 der Welle 10 ist ein Lichtwellenleiter 20 mit optischen Sensoren 21 zur Erfassung von Temperatur und/oder Dehnung der Welle 10 angeordnet. Wie in Figur 1 dargestellt, handelt es sich bei den Sensoren 21 um in einem "Single-Mode"-Wellenleiter 20 eingeschriebene FBG-Sensoren. Bei mehreren FBG-Sensoren 21 kann jeder einzelne Sensor 21 eine spezifische Schwerpunktwellenlänge - die so genannte Bragg-Wellenlänge, die sich insbesondere von derjenigen der übrigen Sensoren 21 unterscheidet - aufweisen. Die FBG-Sensoren 21 werden von einem Lichtsignal LS, das von einer breitbandigen Lichtquelle 41, insbesondere einer SLD (Super Lumineszenz Diode), erzeugt wird, abgefragt. Die Lichtquelle 41 ist dabei Teil einer ortsfest angeordneten Sende-/Empfangseinheit 40. Erzeugt von der ortsfest angeordneten Sende-/Empfangseinheit 40 wird das Lichtsignal LS über ein Übertragungsmittel in den mit den FBG-Sensoren 21 versehenen "Single-Mode"-Wellenleiter eingespeist. In jedem FBG-Sensor 21 wird von dem eingespeisten Lichtsignal LS ein Anteil mit der jeweiligen Bragg-Wellenlänge als Teil-Reflex-Lichtsignal zurückreflektiert. Der übrige Anteil des Lichtsignals LS passiert dagegen den betreffenden FBG-Sensor 21 und trifft gegebenenfalls auf den nächsten FBG-Sensor 21. An der Sende-/Empfangseinheit 40 steht dann ein von den FBG-Sensoren 21 reflektiertes Lichtsignal LS' an, das sich aus den Teil-Reflex-Lichtsignalen der einzelnen FBG-Sensoren 21 zusammensetzt.

Das von den FBG-Sensoren 21 herkommende, in die Sende-/Empfangseinheit 40 wieder eingespeiste Lichtsignal LS' wird von einem optischen Koppler 42 zu einer Auswerteeinheit 43 geleitet. Diese umfasst insbesondere einen optoelektrischen Wandler, einen Analog-/Digital-Wandler und einen digitalen Signalprozessor (in den Figuren nicht dargestellt). Der optische Wandler weist vorteilhafterweise ein spektralselektives Element zur Selektion der einzelnen Teil-Reflex-Signale, beispielsweise in Gestalt eines Spektrometers mit mindestens einer CCD-Zeile, auf. Als Alternative hierzu kann der optoelektrische Wandler zumindest einen komplementären Kantenfilter mit zumindest einem Photodetektor aufweisen. Im Anschluss an die optoelektronische Wandlung findet im Analog-/DigitalWandler eine Analog-/Digital-Wandlung statt. Das digitalisierte Ausgangssignal des Analog-/Digital-Wandlers wird dem digitalen Signalprozessor zugeführt, mittels welchem Messwerte M1, M2,... für die in den FBG-Sensoren 21 erfassten Temperaturen und/oder Dehnungen ermittelt werden.

Die Lichtquelle 41, der optische Koppler 42 und die Auswerteeinheit 43 sind in der Sende-/Empfangseinheit 40 zusammengefasst. Diese Untereinheiten oder Teile davon können aber auch baulich voneinander getrennt, also nicht als gemeinsame Sende-/Empfangseinheit 40, ausgebildet sein. Außerdem ist auch eine rein analoge Auswertung, beispielsweise mittels einer festverdrahteten elektronischen Schaltung möglich. Dann wäre kein Analog-/Digital-Wandler vorhanden und die Auswerteeinheit 43 mittels Analogtechnik realisiert.

Das Übertragungsmittel dient zum Übertragen der von der Sende-/Empfangseinheit 40 ausgesandten und wieder empfangenen Lichtsignale LS und LS' zwischen ortsfest angeordneter Sende-/Empfangseinheit 40 und sich mit der Welle 10 mitdrehendem "Single-Mode"-Wellenleiter 20. Das Übertragungsmittel besteht somit aus einem ortsfesten, der Sende-/Empfangseinheit 40 zugeordneten Teil und einem auf der drehbaren Welle 10 angeordneten Teil. Der ortsfeste Teil umfasst einen mit der Sende-/Empfangseinheit 40 verbundenen "Multi-Mode"-Lichtwellenleiter 30 mit einem ersten Koppelmittel 30K, insbesondere einem Kollimator. Auf der anderen Seite umfasst der auf der drehbaren Welle 10 angeordnete Teil des Übertragers einen mit dem "Single-Mode"-Wellenleiter 20 verbundenen "Multi-Mode"-Wellenleiter 31 mit einem zweiten, dem ersten Koppelmittel 30K zugewandten Koppelmittel 31K, welches insbesondere ebenfalls ein Kollimator ist. Die Verbindung zwischen "Multi-Mode"-Wellenleiter 31 und "Single-Mode"-Wellenleiter 20 erfolgt über zueinander zugewandte Stirnseiten der beiden Wellenleiter 20 und 31.

Das von der Sende-/Empfangseinheit 40 ausgesandte Lichtsignal LS gelangt somit über den ersten "Multi-Mode"-Wellenleiter 30 zum ersten Koppelmittel 30K, welches das Lichtsignal LS vorzugsweise kollimiert zum zweiten Koppelmittel 31K nahezu verlustfrei überträgt, wenn beide Koppelmittel 30K, 31K zueinander zugewandt sind. Die zwischen beiden Koppelmitteln zurückgelegte Strecke wird mit S bezeichnet. Das Lichtsignal LS gelangt vom zweiten Koppelmittel 31K durch den zweiten "Multi-Mode"-Wellenleiter 31 in den "Single-Mode"-Wellenleiter 20, in welchem die FBG-Sensoren 21 mittels des Lichtsignals LS abfragbar sind. Das von den FBG-Sensoren 21 reflektierte Lichtsignal LS' gelangt dann auf umgekehrtem Wege wieder zurück zur Auswertung in die Sende-/Empfangseinheit 40.

Vorteilhafterweise wird die Sende-/Empfangseinheit 40 und damit auch die Lichtquelle 41 und gegebenenfalls die Auswerteeinheit 43 gepulst betrieben, so dass das Lichtsignal LS in Form von Lichtpulsen ausgesandt wird. Das Aussenden der Lichtpulse erfolgt vorteilhafterweise synchron mit den Umdrehungen der Welle, so dass nur in dem Zeitfenster Lichtpulse ausgesendet werden, in welchen sich beide Koppelmittel 30K, 31K übertragungsgeeignet gegenüberstehen. Dabei kann die Sende-/Empfangseinheit 40 beispielsweise von einem Mittel zur Ermittlung der Umdrehungszahl der Welle 10 getriggert betrieben werden.

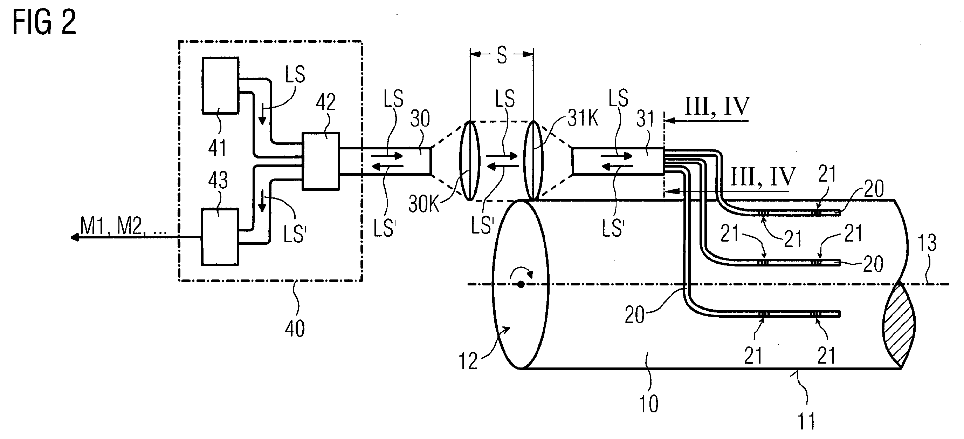

Das in Figur 2 dargestellte Ausführungsbeispiel der optischen Einrichtung gemäß der Erfindung unterscheidet sich von demjenigen aus Figur 1 lediglich dadurch, dass mehrere (hier: drei) "Single-Mode"-Wellenleiter 20 mit dem "Multi-Mode"-Wellenleiter 31 verbunden sind. Damit ist eine (mantel)-flächendeckende Sensoranordnung realisierbar, so dass die Temperatur und/oder die Dehnung der Welle 10 ortsaufgelöst ermittelt werden kann.

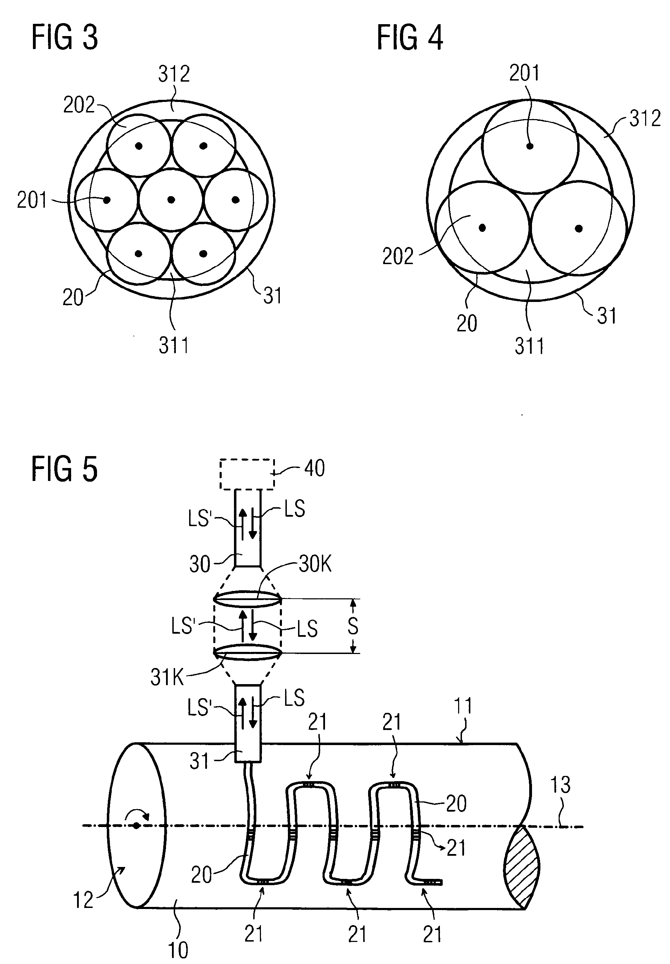

In Figur 3 ist der Querschnitt zu der in Figur 2 eingezeichneten Querschnittslinie III abgebildet. Der Querschnitt verläuft dabei durch die stirnseitigen Kontaktflächen des "Multi-Mode"-Wellenleiters 31 und der "Single-Mode"-Wellenleiter 20. Die sieben "Single-Mode"-Wellenleiter 20 sind dabei derart zu einem Bündel zusammengefasst, dass deren Querschnitte zu einer dichtesten Packung geordnet sind. Der äußere Bereich des "Multi-Mode"-Wellenleiters 31 stellt den Wellenleitermantel 312 dar, der den Wellenleiterkern 311 umschließt. Analog hierzu sind auch die "Single-Mode"-Wellenleiter 20 mit einem Wellenleitermantel 202 und einem Wellenleiterkern 201 ausgebildet. Es ist anzumerken, dass das Verhältnis Wellenleiterkern 201 zu Wellenleitermantel 202 bei einem "Single-Mode"-Wellenleiter 20 bedeutend kleiner ist als das Verhältnis Wellenleiterkern 311 zu Wellenleitermantel 312 beim "Multi-Mode"-Wellenleiter 31. Damit die Lichtsignale LS, LS' zwischen dem "Multi-Mode"-Wellenleiter 31 und dem "Single-Mode"-Wellenleiter 20 übertragen werden können, müssen die Wellenleiterkerne 201 der "Single-Mode"-Wellenleiter 20 innerhalb des Wellenleiterkerns 311 des "Multi-Mode"-Wellenleiters 31 liegen. Bei der in Figur 3 abgebildeten Anordnung wird als Beispiel von einem Kerndurchmesser des "Multi-Mode"-Wellenleiters 31 von 200 µm und einem Außendurchmesser der einzelnen "Single-Mode"-Wellenleiter 20 von 80 µm ausgegangen. Der Kerndurchmesser eines einzelnen "Single-Mode"-Wellenleiters 20 beträgt in der Regel ca. 5 µm.

In Figur 4 ist ebenso wie in Figur 3 der Querschnitt zu der in Figur 2 eingezeichneten Querschnittslinie IV abgebildet. Hier ist der Außendurchmesser der "Single-Mode"-Lichtwellenleiter 20 jedoch größer gewählt, so dass in diesem Beispiel nur drei "Single-Mode"-Wellenleiter 20 mit dem "Multi-Mode"-Wellenleiter 31 verbunden werden können. Beispielsweise haben dabei die "Single-Mode"-Wellenleiter 20 jeweils einen Außendurchmesser von 125 µm bei einem Kerndurchmesser des "Multi-Mode"-Wellenleiters 31 von 200 µm.

Während in Figur 1 und in Figur 2 die Koppelstrecke S stets axial, also parallel zur Achse 13, ausgerichtet ist, zeigt die Figur 5 ein Ausführungsbeispiel, bei welchem die Koppelstrecke S radial, also senkrecht zur Achse 13, ausgerichtet ist. Wie in Figur 1 ist nur ein "Single-Mode"-Wellenleiter 20 mit dem "Multi-Mode"-Wellenleiter 31 verbunden. Der "Single-Mode"-Wellenleiter 20 mit seiner Vielzahl von FBG-Sensoren 21 ist hierbei mäanderförmig auf und/oder in der Mantelfläche 11 der Welle 10 angeordnet. Auch mit einer solchen Anordnung ist eine "flächendeckende" Überwachung der Welle 10 möglich. Selbstverständlich können analog zu Figur 2 auch mehrere derartige mäanderförmig verlegte "Single-Mode"-Wellenleiter 20 mit dem "Multi-Mode"-Wellenleiter 31 verbunden sein.

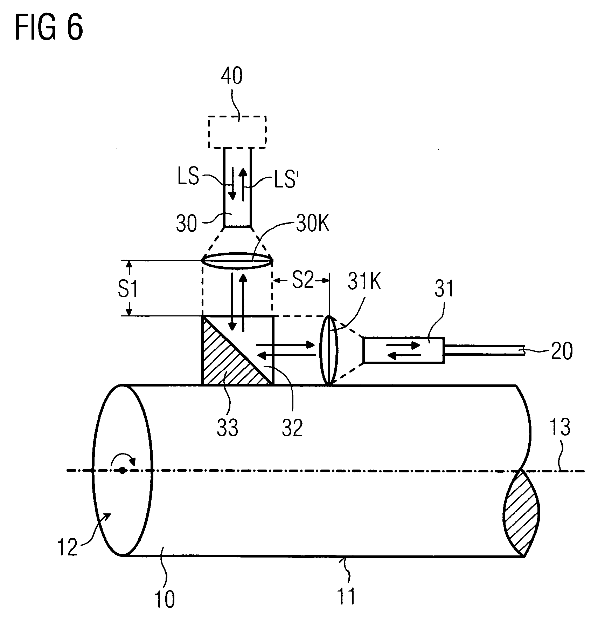

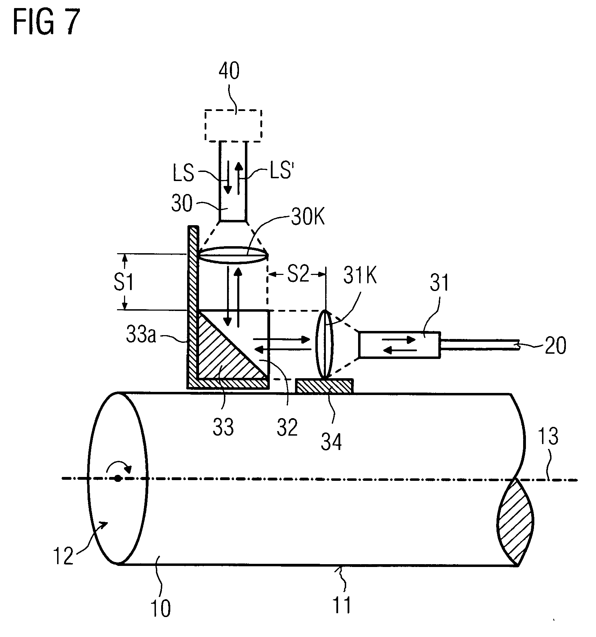

In Figur 6 und in Figur 7 sind jeweils eine Koppelstrecke S abgebildet, die aus einem radial verlaufenden Teil S1 und einem axial verlaufenden Teil S2 besteht. Die Lichtsignale LS und LS' werden dabei von einem Reflexionsmittel 32, insbesondere einem Umlenkprisma, um vorzugsweise 90° umgelenkt. Damit ist das jeweilige Reflexionsmittel 32 in beiden Ausführungsbeispielen ein Teil des Übertragungsmittels. Das jeweilige Reflexionsmittel 32 ist zur Halterung auf einem hierfür vorgesehenen Halter 33, 33a befestigt.

In Figur 6 ist die Halterung 33 auf der Welle 10 nahe des zweiten Koppelmittels 31K befestigt. Während die Halterung 33a gemäß Figur 7 ortsfest bezüglich der drehbaren Welle 10 angeordnet ist. Die Halterung 33a kann zudem zur Fixierung des ersten Koppelmittels 30K, wie in Figur 7 abgebildet, vorgesehen sein. Um einen Kontakt der Halterung 33a mit der Welle 10 zu vermeiden, ist das zweite Koppelmittel 31K beispielsweise auf einem Sockel 32 befestigt.

## Patentansprüche

1. Optische Einrichtung zur Überwachung einer drehbaren Welle (10) mit gerichteter Achse (13), umfassend
- mindestens einen auf der drehbaren Welle (10) angeordneten, mit mindestens einem optischen Sensor (21) versehenen Lichtwellenleiter (20), über welchen der mindestens eine optische Sensor (21) mittels eines Lichtsignals (LS) abfragbar ist,
- eine bezüglich der drehbaren Welle (10) ortfest angeordnete Sende-/Empfangseinheit (40), mit welcher das Lichtsignal (LS) aussendbar ist,
- Übertragungsmittel, mit welchen das Lichtsignal (LS) zwischen der ortsfest angeordneten Sende-/Empfangseinheit (40) und dem auf der drehbaren Welle (10) angeordneten Lichtwellenleiter (20) übertragbar ist, und
- eine der Sende-/Empfangseinheit (40) zugeordnete Auswerteeinheit (43) zur Bestimmung einer physikalischen Größe aus einem vom mindestens einen optische Sensor (21) herkommenden und vom Übertragungsmittel übertragenen Lichtsignal (LS'),
wobei
- das Übertragungsmittel
- mindestens einen bezüglich der drehbaren Welle (10) ortfest angeordneten und der Sende-/Empfangseinheit (40) zugeordnete optischen "Multi-Mode"-Wellenleiter (30) mit zugeordnetem Koppelmittel (30K) und
- mindestens einen weiteren auf der drehbaren Welle (10) exzentrisch zu deren Achse (13) angeordneten und mit dem mindestens einen Lichtwellenleiter (20) verbundenen optischen "Multi-Mode"-Wellenleiter (31) mit zugeordnetem Koppelmittel (31K)
aufweist, und
- die Lichtsignale (LS, LS') über die Koppelmittel (30K, 31K) zwischen den optischen "Multi-Mode"-Wellenleitern (30, 31) übertragbar sind.

2. Optische Einrichtung nach Anspruch 1, **dadurch gekennzeichnet, dass** der mindestens eine optische Sensor (21) mindestens ein Faser-Bragg-Gitter-Sensor und der mindestens eine Lichtwellenleiter (20) mindestens ein "Single-Mode"-Wellenleiter sind.

3. Optische Einrichtung nach Anspruch 2, **gekennzeichnet durch** mehrere Faser-Bragg-Gitter-Sensoren (21) an unterschiedlichen Stellen entlang des mindestens einen optischen "Single-Mode"-Wellenleiters (20).

4. Optische Einrichtung nach Anspruch 2 oder 3, **dadurch gekennzeichnet, dass** der mindestens eine auf der drehbaren Welle (10) angeordnete "Multi-Mode"-Wellenleiter (31) mit mehreren optischen "Single-Mode"-Wellenleitern (20) verbunden ist.

5. Optische Einrichtung nach Anspruch 3 oder 4, **dadurch gekennzeichnet, dass** die Faser-Bragg-Gitter-Sensoren (21) voneinander verschiedene Bragg-Wellenlängen aufweisen.

6. Optische Einrichtung nach einem der vorangehenden Ansprüche, **dadurch gekennzeichnet, dass** das von der Sende-/Empfangseinheit (40) aussendbare Lichtsignal (LS) Wellenlängen aus dem sichtbaren Wellenlängenbereich und/oder dem nahen Infrarot-Wellenlängenbereich aufweist.

7. Optische Einrichtung nach einem der vorangehenden Ansprüche, **dadurch gekennzeichnet, dass** das von der Sende-/Empfangseinheit (40) aussendbare Lichtsignal (LS) mindestens ein Lichtpuls ist.

8. Optische Einrichtung nach einem der vorangehenden Ansprüche, **dadurch gekennzeichnet, dass** die Auswerteeinheit (43) ein optisches Spektrometer mit mindestens einer CCD-Zeile aufweist.

9. Optische Einrichtung nach einem der Ansprüche 1 bis 7, **dadurch gekennzeichnet, dass** die Auswerteeinheit (43) zumindest einen komplementären Kantenfilter mit zumindest einem Fotodetektor aufweist.

## Claims

1. Optical device for monitoring a rotatable shaft (10) with an oriented axis (13), comprising
- at least one optical waveguide (20) provided with an optical sensor (21) disposed on the rotatable shaft (10), via which the at least one optical sensor (21) is able to be interrogated by means of a light signal (LS),
- a transceiver unit (40) arranged in a fixed location relative to the rotatable shaft (10), with which the light signal (LS) is able to be emitted,
- transmission means, with which the light signal (LS) is able to be transmitted between the fixed-location transceiver unit (40) and the optical waveguide (20) arranged on the rotatable shaft (10), and
- an evaluation unit (43) assigned to the transceiver unit (40) for determining a physical variable from a light signal (LS') originating from at least one optical sensor (21) and transmitted by the transmission means,
with
- the transmission means having
- at least one multimode optical waveguide (30) disposed at a fixed location in relation to the rotatable shaft (10) and assigned to the transceiver unit (40) with assigned coupling means (30K) and
- at least one further multimode optical waveguide (31) arranged on the rotatable shaft (10) eccentric to its axis (13) and connected to the at least one optical multimode waveguide (20), with assigned coupling means (31K)
and
- with the light signals (LS, LS') being able to be transmitted via the coupling means (30K, 31K) between the optical multimode waveguides (30, 31).

2. Optical device according to claim 1, **characterised in that** the at least one optical sensor (21) is at least a fibre Bragg grating sensor and the at least one optical waveguide (20) is at least a single-mode optical waveguide.

3. Optical device according to claim 2, **characterised by** a number of fibre Bragg grating sensors (21) at different points along the at least one single-mode optical waveguide (20).

4. Optical device according to claim 2 or 3, **characterised in that** the at least one multimode optical waveguide (31) disposed on the rotatable shaft (10) is connected to a number of individual single-mode optical waveguides (20).

5. Optical device according to claim 3 or 4, **characterised in that** the fibre Bragg grating sensors (21) have different Bragg wavelengths from each other.

6. Optical device according to one of the previous claims, **characterised in that** the light signal (LS) able to be emitted by the transceiver unit (40) has wavelengths from the visible wavelength range and/or the near-infrared wavelength range.

7. Optical device according to one of the previous claims, **characterised in that** the light signal (LS) able to be emitted by the transceiver unit (40) is at least one light pulse.

8. Optical device according to one of the previous claims, **characterised in that** the evaluation unit (43) features an optical mass spectrometer with at least one CCD row.

9. Optical device according to one of one of the claims 1 to 7, **characterised in that** the evaluation unit (43) features at least one complementary edge filter with at least one photodetector.

## Revendications

1. Dispositif optique pour contrôler un arbre ( 10 ) tournant, dont l'axe ( 13 ) est orienté, comprenant
- au moins un guide ( 20 ) d'onde lumineuse, qui est monté sur l'arbre ( 10 ) tournant, qui est pourvu d'un capteur ( 21 ) optique et par lequel le au moins un capteur ( 21 ) optique peut être interrogé au moyen d'un signal ( LS ) lumineux,
- une unité ( 40 ) d'émission/réception, qui est disposée à poste fixe par rapport à l'arbre ( 10 ) tournant et par laquelle le signal ( LS ) lumineux peut être émis,
- des moyens de transmission par lesquels le signal ( LS ) lumineux peut être transmis entre l'unité ( 40 ) d'émission/réception disposée à poste fixe et le guide ( 20 ) d'onde lumineuse monté sur l'arbre ( 10 ) tournant, et
- une unité ( 43 ) d'exploitation associée à l'unité ( 40 ) d'émission/réception pour la détermination d'une grandeur physique à partir d'un signal ( LS' ) lumineux provenant d'au moins un capteur ( 21 ) optique et transmis par les moyens de transmission,
dans lequel
- les moyens de transmission comportent
- au moins un guide ( 30 ) d'onde optique "multi-mode" disposé à poste fixe par rapport à l'arbre ( 10 ) tournant et associé à l'unité ( 40 ) d'émission/réception en ayant des moyens ( 34 ) associés de couplage, et
- au moins un autre guide ( 31 ) d'onde optique "multi-mode" disposé sur l'arbre ( 10 ) tournant en étant excentré par rapport à son axe ( 13 ) et relié au au moins un guide ( 20 ) d'onde lumineuse en ayant des moyens ( 31K ) de couplage associés, et
- les signaux ( LS, LS' ) lumineux peuvent être transmis entre les guides ( 30, 31 ) d'onde optique "multi-mode" par les moyens ( 30K, 31K ) de couplage.

2. Dispositif optique suivant la revendication 1, **caractérisé en ce que** le au moins un capteur ( 21 ) optique est au moins un capteur à fibre-réseau de Bragg et le au moins un guide ( 20 ) d'onde lumineuse est au moins un guide lumineux "monomode".

3. Dispositif optique suivant la revendication 2, **caractérisé par** plusieurs capteurs ( 21 ) à fibre-réseau de Bragg en des emplacements différents le long du au moins un guide ( 20 ) d'onde optique "monomode".

4. Dispositif optique suivant la revendication 2 ou 3, **caractérisé en ce que** le au moins un guide ( 31 ) d'onde "multi-mode" disposé sur l'arbre ( 10 ) tournant est relié à plusieurs guides ( 20 ) d'onde optique "monomode".

5. Dispositif optique suivant la revendication 3 ou 4, **caractérisé en ce que** les capteurs ( 21 ) à fibre-réseau de Bragg ont des longueurs d'onde de Bragg qui sont différentes les unes des autres.

6. Dispositif optique suivant l'une des revendications précédentes, **caractérisé en ce que** le signal ( LS ) lumineux qui peut être émis par l'unité ( 40 ) d'émission/réception a des longueurs d'onde dans le domaine de longueurs d'onde visibles et/ou dans le domaine de longueurs d'onde du proche infrarouge.

7. Dispositif optique suivant l'une des revendications précédentes, **caractérisé en ce que** le signal ( LS ) lumineux qui peut être émis par l'unité ( 40 ) d'émission/réception est au moins une impulsion lumineuse.

8. Dispositif optique suivant l'une des revendications précédentes, **caractérisé en ce que** l'unité ( 43 ) d'exploitation comporte un spectromètre optique ayant au moins une ligne CCD.

9. Dispositif optique suivant l'une des revendications précédentes, **caractérisé en ce que** l'unité ( 43 ) d'exploitation comporte au moins un filtre interférentiel ayant au moins un photodétecteur.
